# EUROPEAN PATENT SPECIFICATION

(11) **EP 2 886 752 B1**
(45) Date of publication and mention of the grant of the patent: **13.01.2021**
(21) Application number: 14199983.9
(22) Date of filing: 23.12.2014
(51) Int. Cl.: E04H 12/12

(54) **Wind turbine comprising a tower fitted with a plurality of voussoirs and method of construction of said wind turbine**
Windturbine mit einem Turm mit mehreren Keilsteinen und Verfahren zur Herstellung einer derartigen Windturbine
Éolienne comprenant une tour équipée d'une pluralité de voussoirs et procédé de construction de ladite turbine éolienne

(30) Priority: 23.12.2013 ES 201331902
(43) Date of publication of application: 24.06.2015
(73) Proprietor: Nordex Energy Spain, S.A., 31395 Barasoain Navarra (ES)
(72) Inventor: SAMPEDRO GUTIÉRREZ, Rodrigo, 31621 Sarriguren (Navarra) (ES); GARCIA MAESTRE, Iván, 31621 Sarriguren (Navarra) (ES); ARLABÁN GABEIRAS, Teresa, 31621 Sarriguren (Navarra) (ES); ARISTEGUI LANTERO, José Luis, 31621 Sarriguren (Navarra) (ES); GARCÍA SAYÉS, José Miguel, 31621 Sarriguren (Navarra) (ES); NÚÑEZ POLO, Miguel, 31621 Sarriguren (Navarra) (ES)
(74) Representative: Pons

(56) References cited:
- WO-A1-2013/022341
- DE-A1- 2 235 499
- DE-A1- 2 903 573
- DE-U1- 9 112 112
- FR-A1- 2 784 706

## Description

### OBJECT OF THE INVENTION

The present invention can be included in the technical field of voussoirs comprising an integrated sealing element and more specifically a sealing element which allows the filler material to be maintained in the cavity created between adjacent voussoirs.

### BACKGROUND OF THE INVENTION

The goal of wind energy consists of generating electricity from wind by wind turbines at maximum efficiency and minimum cost. The said wind turbines basically consist of a tower, a nacelle which houses the generator and a rotor formed by at least two blades. The tower is in charge of supporting all elements incorporated into the nacelle and transmitting to the foundations all reaction forces generated due to the different aerodynamic actions and operating conditions in the wind turbine.

Generally, given the size of the turbine and thus of the tower, said tower is made of reinforced concrete modular sections called voussoirs. For the union of these voussoirs, all the vertical and horizontal joints must remain joined together by pouring filler into them (usually mortar).

The process of pouring mortar into vertical joints involves the use of some auxiliary elements called formwork whose mission is to retain the filler material. They are usually attached to adjacent voussoirs between which the joint with the filler material is placed. This work is done in field once the voussoirs are positioned to form a section according to dimensional tolerances and is a job that requires several hours. When the filler material sets, the formwork is removed. This work is also repeated in the case of horizontal joints.

Traditionally the filler material is poured into the vertical joints and it is the force of gravity that facilitates the filling of this type of joint. The hydrostatic pressure generated by the column of filler material (mortar), given the dimensions of the voussoirs, makes it necessary for the auxiliary means (formwork) to have a good system of attachment to the said voussoirs to prevent possible leakage of filler. The finish of the voussoirs and irregular surface make it necessary for this formwork to be adaptable.

Therefore the fixing of the formwork to specific voussoirs and the conditions required for installation and for the mortar setting process to be completed with a guaranteed quality implies a cost in assembly times attributable to said formwork.

Also during assembly of the towers of concrete at low temperatures it is necessary to ensure minimum conditions of temperature (5°C) of the voussoirs before pouring the mortar and of the mortar poured into the vertical and horizontal joints, to ensure a proper setting so that the mortar can develop all its necessary mechanical properties (resistance).

The setting of the vertical joints currently represents a bottleneck in the process of assembling wind turbine towers since the voussoirs are usually assembled in sections and then hoisted. It is therefore necessary for the bonding process between adjacent voussoirs to be accelerated as much as possible without jeopardizing the quality of these vertical joints.

Two types of formwork used in the process of pouring mortar vertical joints are currently known. These are auxiliary physical elements which act as mechanical stop to the pressure generated by the mortar, which is in a state of "pseudo-fluid" during the pouring process and which is set in place in field after placing the voussoirs.

First type are metal formworks (which can be made of wood or any other material) and another type are chemical formworks.

Metal formwork is typically executed with steel profiles with side holes that are clamped on both sides of the joint. The problem with the metal formwork is the adjustment of the profiles to the side surfaces and the clamping pressure (to be able to withstand the hydrostatic pressure), and the adaptability to the side surfaces of the concrete. Chemical formworks are usually resins which after setting become very hard. The advantage of the latter alternative is its adaptability to the surface irregularities of the voussoirs but its drawback is the high cost.

From the state of the art it is known document WO2013022341 which describes a method of assembling a wall from prefabricated wall parts, wherein first and second sealing members are included in the gap to each act between said edge surfaces of the wall parts. The sealing members define a cavity which is filled with a solidifying liquid such that the solidifying liquid acts on a cavity facing surface of each sealing member and presses the sealing member into engagement with at least one of the edge surfaces.

### DESCRIPTION OF THE INVENTION

The present disclosure proposes a voussoir which is not claimed, with at least one integrated sealing element disposed at one side of the voussoir intended to be placed facing the flank of another adjacent voussoir. The space defined between the flanks of adjacent voussoirs and at least two sealing elements is a cavity which is intended to receive a filler material which will ensure the joining between the voussoirs. The sealing element is of an elastomeric material and allows the filler material to be retained within the cavity.

The voussoir comprises an inner side, which, in the case of using it to build a wind turbine tower, is disposed towards the inside of said tower, and comprises an outer face which, in the case of using it to build a wind turbine tower, is oriented towards the outside of said tower.

The sealing element has a dimension, measured in a plane perpendicular to the flank on which it is located, greater than the minimum distance between adjacent voussoirs when these are joined, measured at the point where the sealing element contacts the flank of the adjacent voussoir.

Thus, when two adjacent voussoirs are arranged in the final position in which they are joined, the sealing element of one of the voussoirs is in contact with the flank of the adjacent voussoir. The sealing element acquires its final shape after deformation brought by the force of the adjacent voussoir in combination with the hydrostatic force of the filler material poured into the cavity. The shape acquired by the inner surface of the sealing element (i.e. the surface side facing the cavity) when subjected to hydrostatic pressure of the filler promotes a resultant sealing force that ensures said function.

This effect may be enhanced by a decreasing thickness of the sealing element from a support section (section in contact with the flank of the voussoir where it is located) to the opposite end which is intended to stay in contact with the flank of the adjacent voussoir. Thus, the area of the opposite end of the sealing element can bend due to the effect of hydrostatic pressure or to the effect of the adjacent voussoir pressure and adopt its final shape.

One object of the invention is a wind turbine according to appended claim 1.

In one embodiment of the invention the wind turbine tower comprises at least one longitudinal section composed of an even number of voussoirs and part of these voussoirs comprise two sealing elements in contact with the inner face and other voussoirs comprise two sealing in contact with the outer face. In another embodiment the tower section may comprise an odd number of voussoirs between which, apart from being the types of voussoirs described above, there is at least one voussoir with a sealing element in contact with the outer face and one sealing element in contact with the inner face.

Another object of the invention is a method of construction of wind turbines according to appended claim 13.

The present invention eliminates the process of setting up both chemical and metal formwork so that assembly times of wind turbine towers in field are reduced.

Another advantage of the present invention is that the sealing element of the voussoirs, due to its material and its geometry, ensures the sealing of cavity throughout the lifetime of the wind turbine, preventing dirt and moisture entering the joints between voussoirs of the tower.

The sealing element integrated in the voussoir also acts as a thermal insulator during the pouring process allowing the pouring of the filler material (preferably mortar) to be more effective at low temperatures.

Additionally, a good bond is guaranteed between voussoirs to resist the hydrostatic pressure, and the dynamic properties of said joints are improved by incorporating such new vibration dissipating element.

### DESCRIPTION OF THE DRAWINGS

To complement the description being made and in order to aid a better understanding of the characteristics of the invention according to a preferred practical embodiment thereof, accompanying as an integral part of said description, a set of illustrative drawings, of a non-limiting nature, is attached to this document, which shows the following:
Figure 1 shows a perspective view of two voussoirs with integrated sealing element.
Figure 2a shows a view of the sealing element of a voussoir in one embodiment of the invention.
Figure 2b figure shows a view of the cavity created between the sealing elements of two voussoirs as shown in Figure 2a.
Figure 2c shows the resultant force on the sealing element due to the hydrostatic pressure of the filler material.
Figure 3a shows a view of the sealing element of the voussoir in an embodiment which comprises a reinforcement section.
Figure 3b shows a view of the sealing element from figure 3a when it has come into contact with the adjacent voussoir.
Figure 4 shows a view of the sealing element of the voussoir in an alternative solution not part of the present invention.
Figure 5 shows a view in which some voussoirs are shown with a recess in an alternative solution not part of the present invention.
Figure 6a shows a view of the sealing element of the voussoir in an alternative solution not part of the present invention.
Figure 6b shows a view of the cavity created between the sealing elements of two voussoirs as shown in Figure 6a. (not part of the present invention)
Figure 6c shows the movement of the assembly of two voussoirs as shown in Figure 6a. (not part of the present invention)
Figure 7 shows a view of a sealing element of the voussoir in an alternative solution not part of the present invention
Figure 8 shows a section of a wind turbine tower of the present invention in which voussoirs with sealing elements distributed in different places can be seen.

### PREFERRED EMBODIMENT OF THE INVENTION

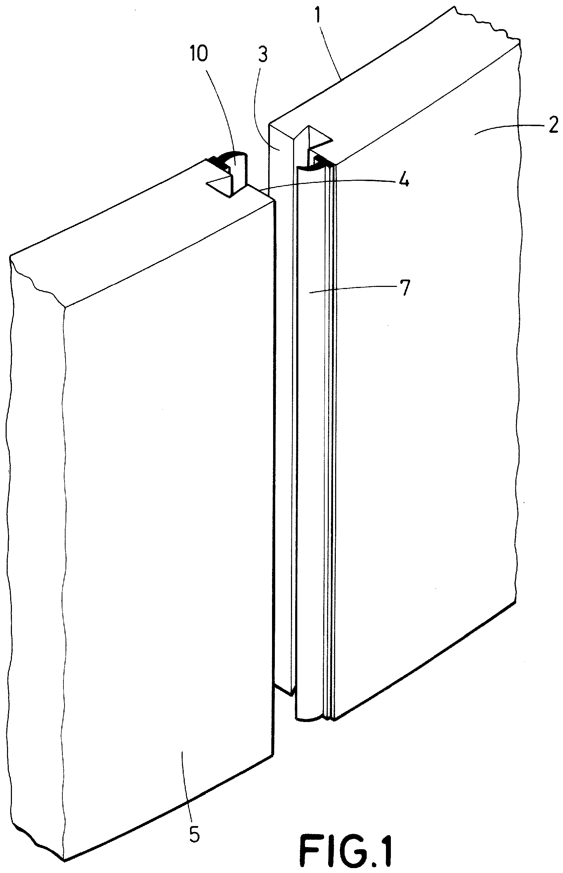

The following shows, with the help of figures 1-3b and 8, an exemplary embodiment of the invention.

A voussoir is proposed with at least one integrated sealing element, a wind turbine comprising a tower with a plurality of voussoirs with integrated sealing element and a method of construction of the wind turbine.

Figure 1 shows the voussoir with an integrated sealing element that is protected. Said voussoir comprises an inner face (1), an outer face (2) and at least one flank (3) configured to be facing the flank (4) of an adjacent voussoir (5) to create a cavity (6) for receiving a filler material to join the two voussoirs. Preferably the sealing element (7) extends along the entire flank (3).

The key of the voussoir of the present invention is that said flank (3) comprises a sealing element (7) of elastomeric material with a closure section (8) designed to be in contact with the flank (4) of the adjacent voussoir (5) closing the cavity (6) laterally and maintaining the filler material within said cavity (6).

Preferably said flank (3) is a lateral flank of the voussoir and the cavity (6) that is created between voussoirs is vertical.

Thus, the filler material poured into the cavity (6) is retained inside said cavity because the closure section (8) of the sealing element (7) is deformable and contacts with the adjacent voussoir (4) increasing the contact surface between both elements due to the hydrostatic pressure after the filler material (preferably mortar) has been poured in.

The sealing element (7) has a height (L) greater than the distance (D) between the flank (3) where it is situated and the flank (4) of the adjacent voussoir (5) to which it is joined. It thus remains in contact with the flank (4) of the adjacent voussoir allowing the sealing of the cavity (6).

Preferably the sealing element (7) is attached to the flank (3) by a support section (13) and comprises an opposite end with at least one deformable closure section (8) designed to be in contact with the flank (4) of an adjacent voussoir.

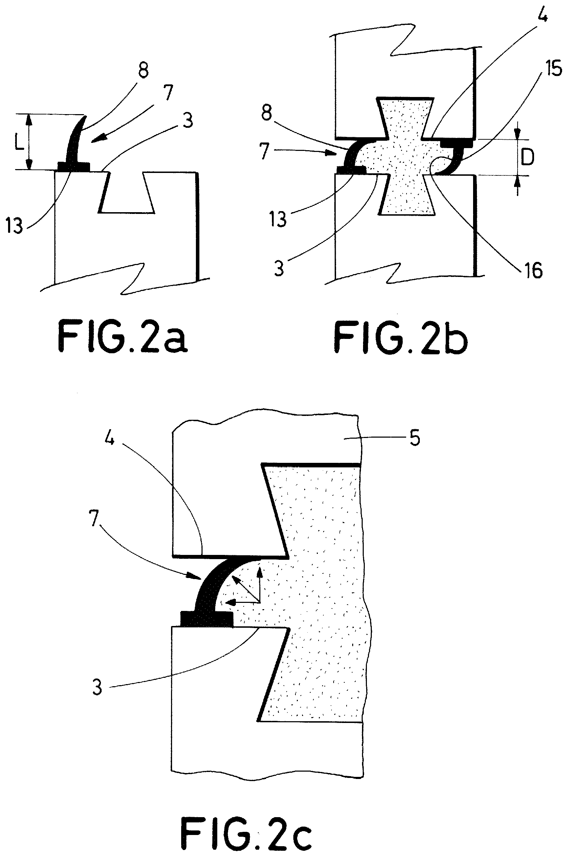

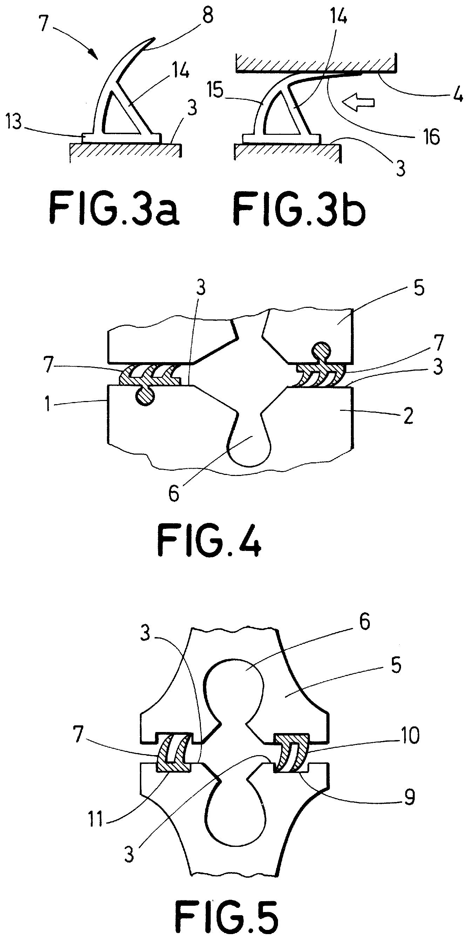

In one embodiment of the invention the closure section (8) of the sealing element acquires an inclined angle in relation to said flank (4) when the filler is inside the cavity (6), as shown for example in figures 2b, 3b. This is because the closure section (8) is deformable and acquires its final shape after the positioning of the voussoir (3) and the adjacent voussoir (4) and by the action of hydrostatic pressure exerted after pouring the filler material into the cavity (6) increasing the contact surface of the closure section (8) with the adjacent voussoir (4) after this process.

The closure section (8) has an inner surface (16) configured to remain in contact with the filler material and an outer surface (15) designed to remain in contact with the flank (4) of an adjacent voussoir.

In the position described (adjacently arranged voussoirs with the sealing elements in contact with the adjacent voussoir) the outer surface (15) of the closure section (8) comes into contact with the flank (4) of the adjacent voussoir so that it generates an watertight closure. Furthermore, in one embodiment of the invention, the inner surface (16) of the sealing element (7) adopts curved geometry, with the centre of curvature disposed toward the inside of the cavity. The force resulting from the hydrostatic pressure of the filler material (with which the cavity (6) is filled) on the inner surface (16) of the sealing element (7) (i.e. the surface of the sealing element (7) which is oriented into the cavity (6)) results in a force with a perpendicular component toward the surface of the flank of the adjacent voussoir, as seen in Figure 2c.

The hydrostatic pressure of the filler material exerts a resultant force perpendicular to the inner surface (16) of the sealing element (7) and the geometry adopted by the sealing element (7) upon deformation causes its inner surface (16) (the surface which is oriented towards the cavity (6)) to be preferably oblique, whereby said pressure results in a self-sealing force. This self-sealing force is achieved by the combination of both the geometry and the elastic properties of the sealing element (7).

In one embodiment, the sealing element (7) has a geometry as shown in Figure 2a which extends from the flank (3) with at least one curved section with respect to said flank (3) with a centre of curvature located in the cavity (6). The sealing element (7) has a dimension (L) in a plane perpendicular to the direction of the flank (3) substantially greater than the shortest distance (D) between adjacently arranged voussoirs (L> D) as shown in figures 2a and 2b.

The present invention allows different embodiments. For example there may be embodiments in which the very placing of the voussoirs causes the deformation of the sealing element (7) so that it acquires its final shape, and there may be embodiments in which the sealing element (7) and the surface of the flank of the adjacent voussoir are arranged in contact without applied force.

The sealing element (7) can be preassembled in the voussoir in the factory or in field, prior to the placing of the voussoir in preformed sections, thus simplifying assembly and reducing times.

In one embodiment shown in Figure 3a the sealing element (7) further comprises a reinforcing section (14) which is a wall extending from the support section (13) to the closure section (8) and is designed to strengthen the sealing element (3). Figure 3b shows the position in which the sealing element (7) is found when it enters in contact with the flank (4) of the adjacent voussoir (5).

As shown for example in figures 2a and 3a the closure section (8) of the sealing element (7) may have a decreasing thickness from the support section (13) to the opposite end intended to remain in contact with the flank (4) of the adjacent voussoir (5).

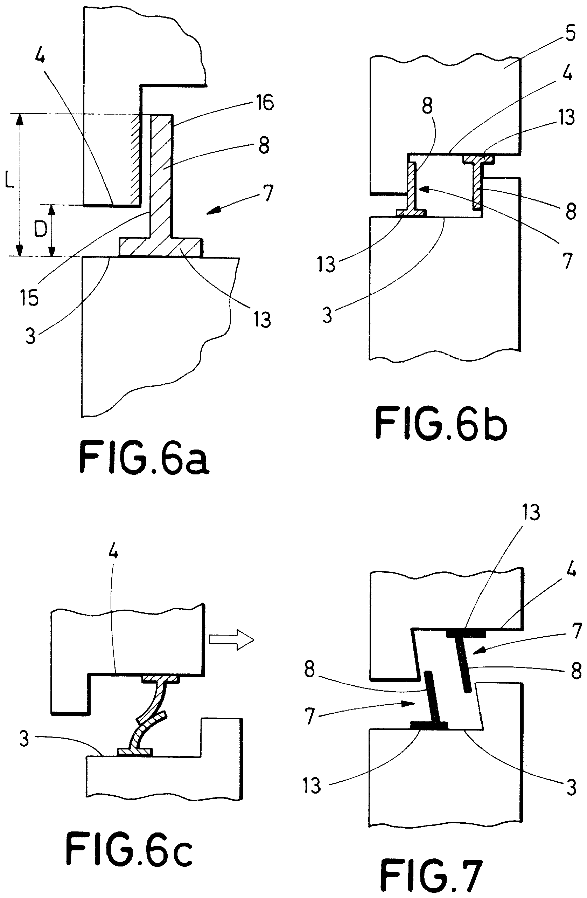

Figure 6a shows an alternative solution not part of the present invention, wherein the closure section (8) extends perpendicular to the flank (3) in which the voussoir is located. Figure 6b shows another alternative solution not part of the present invention wherein a cavity (6) is formed between sealing elements (7). Similarly, figure 6c (not part of the present invention) illustrates the movement transmitted to the voussoirs comprising a sealing element (7). It can be seen how the end sections (8) of said sealing elements (7) are deformed during the assembly operation even if then in the final position they are not deformed.

Figure 7, illustrates an alternative solution not part of the present invention, wherein the closure section (8) extends inclined to the flank (3) and to the flank (4) of the adjacent voussoir with which it enters into contact.

The sealing element (7) takes its final form after the pouring of the filler material. The geometry of the sealing element (7) in cooperation with the geometry of the voussoir increases the surface contact with the opposite voussoir due to the effect of the hydrostatic pressure of said filler material. Furthermore, as previously described, the height of the sealing element (7) measured in a plane perpendicular to the flank (3) of the voussoir is greater than the distance between the flanks (3, 4) of adjacent voussoirs so that the sealing effect of the sealing element (7) increases.

Figure 4 shows an alternative solution not part of the present invention, which illustrates a joint between adjacent voussoirs in which both have a sealing element (7). Figure 5 shows another alternative solution not part of the present invention in which the voussoir further comprises a recess (9) on the flank (3) designed to receive a sealing element (10) from an adjacent voussoir (5) and further comprising a recess (11) in the interior of the voussoir with the sealing element (7).

A further object of the invention is a wind turbine comprising a tower made up of longitudinal sections in turn comprising a plurality of voussoirs wherein adjacent voussoirs are as described above. These adjacent voussoirs create a cavity (6) between them designed to receive the filler material that is retained in said cavity (6) by means of the sealing elements (7) of the voussoirs.

Preferably each voussoir has two sealing elements. More preferably some of the voussoirs have the two sealing elements (7) in the flank (3) in contact with the inner face (1) of the voussoir and in the adjacent voussoirs the sealing elements (7) are in the flank (3) in contact with the outer face (2) alternately in one section of the tower. Thus, the cavity (6) is completely closed. The volume of the cavity (6) is delimited by the two sealing elements (7).

In the sealing elements (7), whether they are arranged in contact with the inner face (1) or with the outer face (2), the closure section (8) is always oriented towards the cavity (6) to ensure the sealing of said cavity (6).

In one embodiment of the invention the wind turbine tower comprises at least one longitudinal section which in turn comprises an even number of voussoirs of which some voussoirs comprise two sealing elements (7) in contact with the inner face (1) and other voussoirs comprising two sealing elements (7) in contact with the outer face (2). In another embodiment of the invention the wind turbine tower comprises at least one longitudinal section which in turn comprises an odd number of voussoirs of which some voussoirs have two sealing elements (7) in contact with the inner face (1), other voussoirs have two sealing elements (7) in contact with the outer face (2) and at least one voussoir comprises a sealing element in contact with the outer face (2) and another with the inner face (1).

Also an object of the present invention is a method of constructing the above-described wind turbine comprising the steps of:
- arranging the voussoirs that make up the wind turbine tower adjacent one another creating a cavity (6),
- joining adjacent voussoirs until the sealing element (7) of each voussoir enters in contact with the flank (4) of the adjacent voussoir,
- pouring filler material into the cavity (6).

Each voussoir is configured to be arranged with a movement substantially parallel to the flank so that the sealing element (7) is deformed in the direction of relative movement of the voussoir on which it is integrated. Thus, the inner surface (16) of the sealing element (7) (i.e. the surface facing the cavity) adopts the appropriate form. Therefore the sealing elements (7) must be placed in contact with the inner and outer faces considering the order of assembly of the voussoirs that make up the section.

In a section with an even number of voussoirs there are voussoirs of two types: voussoirs comprising two sealing elements (7) in contact with the inner face (1) and voussoirs comprising two sealing elements (7) in contact with the outer face (2) (each of the sealing elements is in an opposite flank (3) of the voussoir). In this case the first voussoir mounted has two sealing elements (7) in contact with the outer face (2) and the last voussoir to be mounted has the sealing elements (7) in contact with the inner face (1).

In a section with an odd number of voussoirs there are three different types of voussoirs: voussoirs with two sealing elements (7) in contact with the inner face (1), voussoirs with two sealing elements (7) in contact with the outer face (2) and at least one voussoir with a sealing element in contact with the outer face (2) and the other with the inner face (1).

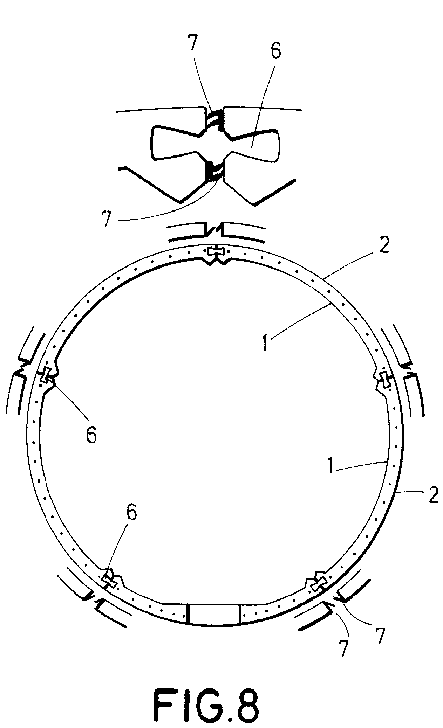

In this case the first voussoir that is mounted has the sealing elements (7) in contact with the outer face (2), the last voussoir to be mounted has a sealing element (7) in contact with the inner face (1) and another element sealant (7) in contact with the outer face (2). In intermediate stages the voussoirs which have the two sealing elements (7) in contact with the inner face (1) and the remaining voussoirs that have two sealing elements (7) in contact with the outer face (2) are mounted adjacent to one another, as shown for example in figure 8.

## Claims

1. Wind turbine comprising a tower made up of longitudinal sections in turn comprising a plurality of voussoirs, wherein the voussoirs comprise an inner face (1), an outer face (2) and at least one flank (3) configured to be facing a flank (4) of an adjacent voussoir (5) so as to define a cavity (6), configured to be at least partially filled by a filler material, and each voussoir comprises at least one sealing element (7) of elastomeric material that is configured to remain in contact with the flank (4) of the adjacent voussoir closing the cavity (6) laterally, the sealing element (7) having a height, measured in a perpendicular direction to the flank (3), greater than the distance between the flank (3) where said sealing element is located and the flank (4) of the adjacent voussoir (5) when they are joined; whereby each voussoir comprises two opposite flanks (3) configured to be facing a flank (4) of an adjacent voussoir and in each flank (3) the voussoirs comprise a sealing element (7) placed in contact with the inner face (1) of the voussoir or placed in contact with the outer face (2) of the voussoir and whereby the voussoirs are placed in such a way that a flank in which the sealing element (7) is arranged in contact with the inner face (1) is placed adjacent to a flank of an adjacent voussoir in which the sealing element is in contact with the outer face (2); ; **characterised in that** each voussoir is configured to be arranged with a movement substantially parallel to the flank, so the sealing element (7) is deformed in the direction of relative movement of the voussoir on which it is integrated.

2. Wind turbine according to claim 1 **characterized in that** each section comprises at least one voussoir with two sealing elements in contact with the outer face (2), one in each flank (3).

3. Wind turbine according to claim 1 **characterized in that** each section further comprises at least one voussoir with two sealing elements in contact with the inner face (1), one in each flank (3).

4. Wind turbine according to claim 1 **characterized in that** it further comprises at least one voussoir with two sealing elements, one in contact with the inner face (1) and one in contact with the outer face (2), one in each flank (3).

5. Wind turbine according to claim 1 **characterised in that** the sealing element (7) is joined to the flank (3) by means of a support section (13) and comprises an opposite end with at least one deformable closure section (8) such that contact with the adjacent voussoir (5) takes place in the closure section (8).

6. Wind turbine according to claim 5 **characterised in that** the closure section (8) has an inner surface (16) configured to be in contact with the filler material and an outer surface (15) designed to be in contact with the flank (4) of an adjacent voussoir.

7. Wind turbine according to claim 6 **characterised in that** the inner surface (16) of the closure section (8) has a curved geometry with its centre of curvature being located toward the inside of the cavity (6).

8. Wind turbine according to claim 5 **characterised in that** the sealing element (7) further comprises a reinforcing section (14) which is a wall extending from the support section (13) to the closure section (8) and is designed to reinforce the sealing element (7).

9. Wind turbine according to claim 5 **characterised in that** the closure section (8) has a decreasing thickness from the support section (13) to the end designed to be in contact with the flank (4) of the adjacent sealing element (5).

10. Wind turbine according to claim 1 **characterised in that** the sealing element (7) extends along the entire flank (3).

11. Wind turbine according to claim 1 **characterised in that** the voussoirs further comprise a recess (9) on the flank (3) designed to receive a sealing element (10) of an adjacent voussoir (5).

12. Wind turbine according to claim 1 **characterised in that** the voussoirs further comprise a recess (11) on the flank (3), in the interior wherein the sealing element (7) is arranged.

13. Method of construction of the wind turbine described in any one of claims 1 to 12 **characterised by** comprising the steps of:
- arranging the voussoirs that make up the tower of the wind turbine adjacent to each other creating a cavity (6), with a movement substantially parallel to the flank so the sealing element (7) is deformed in the direction of relative movement of the voussoir on which it is integrated,
- joining adjacent voussoirs until the sealing element (7) of each enter in contact with the flank (4) of the adjacent voussoir,
- pouring filler material into the cavity (6).

14. Method of construction according to claim 13 **characterised in that** at least one longitudinal section of the wind turbine tower comprises an even number of voussoirs of which some voussoirs comprise two sealing elements (7) in contact with the inner face (1) and other voussoirs comprise two sealing elements (7) in contact with the outer face (2) and the step of arranging the voussoirs is performed in the following order:
- first, setting up one of the voussoirs that has the sealing elements (7) in contact with the outer face (2),
- finally setting up one of the voussoirs that has the sealing elements (7) in contact with the inner face (1).

15. Method of construction according to claim 13 **characterised in that** at least one longitudinal section of the wind turbine tower comprises an odd number of voussoirs of which some voussoirs have two sealing elements (7) in contact with the inner face (1), while other voussoirs have two sealing elements (7) in contact with the outer face (2) and at least one voussoir comprises a sealing element in contact with the outer face (2) and another with the inner face (1) and the step of arranging the voussoirs is performed in the following order:
- first, setting up one of the voussoirs that has the sealing elements (7) in contact with the outer face (2),
- in intermediate stages, setting up voussoirs that have two sealing elements (7) in contact with the inner face (1) and voussoirs that have two sealing elements (7) in contact with the outer face (2) adjacent to one another,
- finally, setting up the voussoir that has a sealing element (7) in contact with the inner face (1) and another sealing element (7) in contact with the outer face (2).

16. Method of construction according to claim 13 **characterised in that** the sealing elements (7) are placed in contact with the inner and outer faces considering the order of assembly of the voussoirs that make up the longitudinal section.

## Patentansprüche

1. Windkraftanlage mit einem Turm, der aus Längsschnitten besteht, die wiederum eine Vielzahl von Bogensteinen umfassen, wobei die Bogensteine eine Innenfläche (1), eine Außenfläche (2) und mindestens eine Flanke (3) umfassen, die so konfiguriert sind, dass sie einer Flanke (4) eines benachbarten Bogensteins (5) zugewandt ist, um einen Hohlraum (6) zu definieren, der konfiguriert ist, um mindestens teilweise durch ein Füllmaterial gefüllt zu werden, und wobei jeder Bogenstein mindestens ein Dichtungselement (7) aus Elastomermaterial umfasst, das so konfiguriert ist, dass es mit der Flanke (4) des benachbarten Bogensteins in Kontakt bleibt, die den Hohlraum (6) lateral schließt, wobei das Dichtungselement (7) eine Höhe gemessen in senkrechter Richtung zur Flanke (3) aufweist, die größer als der Abstand zwischen der Flanke (3), an der sich das Dichtungselement befindet, und der Flanke (4) des benachbarten Bogensteins (5), wenn diese zusammengefügt sind, aufweist; wobei jeder Bogenstein zwei gegenüberliegende Flanken (3) umfasst, die so konfiguriert sind, dass sie einer Flanke (4) eines benachbarten Bogensteins zugewandt sind, und in jeder Flanke (3) die Bogensteine ein Dichtungselement (7) umfassen, das in Kontakt mit der Innenfläche (1) des Bogensteins oder in Kontakt mit der Außenfläche (2) des Bogensteins platziert ist, und wobei die Bogensteine platziert werden, um eine Flanke, in der das Dichtungselement (7) in Kontakt mit der Innenfläche (1) angeordnet ist, benachbart einer Flanke eines benachbarten Bogensteins platziert ist, in dem das Dichtungselement mit der Außenfläche (2) in Kontakt ist; **dadurch gekennzeichnet, dass** jeder Bogenstein konfiguriert ist, um mit einer im Wesentlichen zur Flanke senkrechten Bewegung angeordnet zu werden, sodass das Dichtungselement (7) in Richtung der relativen Bewegung des Bogensteins verformt wird, in den es integriert ist.

2. Windkraftanlage nach Anspruch 1, **dadurch gekennzeichnet, dass** jeder Abschnitt mindestens einen Bogenstein mit zwei Dichtungselementen in Kontakt mit der Außenfläche (2) umfasst, eines in jeder Flanke (3).

3. Windkraftanlage nach Anspruch 1 **dadurch gekennzeichnet, dass** jeder Abschnitt ferner mindestens einen Bogenstein mit zwei Dichtungselementen in Kontakt mit der Innenfläche (1) umfasst, eines in jeder Flanke (3).

4. Windkraftanlage nach Anspruch 1, **dadurch gekennzeichnet, dass** diese ferner mindestens einen Bogenstein mit zwei Dichtungselementen umfasst, eines in Kontakt mit der Innenfläche (1) und eines in Kontakt mit der Außenfläche (2), eines in jeder Flanke (3).

5. Windkraftanlage nach Anspruch 1, **dadurch gekennzeichnet, dass** das Dichtungselement (7) mittels eines Stützabschnitts (13) mit der Flanke (3) zusammengefügt ist und ein gegenüberliegendes Ende mit mindestens einem verformbaren Verschlussabschnitt (8) umfasst, so dass ein Kontakt mit dem benachbarten Bogenstein (5) in dem Verschlussabschnitt (8) stattfindet.

6. Windkraftanlage nach Anspruch 5, **dadurch gekennzeichnet, dass** der Verschlussabschnitt (8) eine Innenfläche (16) aufweist, die so konfiguriert ist, dass sie mit dem Füllmaterial in Kontakt ist, und eine Außenfläche (15), die so gestaltet ist, dass sie mit der Flanke (4) eines benachbarten Bogensteins in Kontakt ist.

7. Windkraftanlage nach Anspruch 6, **dadurch gekennzeichnet, dass** die Innenfläche (16) des Verschlussabschnitts (8) eine gekrümmte Geometrie aufweist, wobei sich ihr Krümmungszentrum zur Innenseite des Hohlraums (6) hin befindet.

8. Windkraftanlage nach Anspruch 5, **dadurch gekennzeichnet, dass** das Dichtungselement (7) ferner einen Verstärkungsabschnitt (14) umfasst, der eine Wand ist, die sich vom Stützabschnitt (13) zum Verschlussabschnitt (8) erstreckt und zum Verstärken des Dichtungselements (7) gestaltet ist.

9. Windkraftanlage nach Anspruch 5, **dadurch gekennzeichnet, dass** der Verschlussabschnitt (8) vom Stützabschnitt (13) bis zum Ende, das so ausgelegt ist, dass es mit der Flanke (4) des benachbarten Dichtungselements (5) in Kontakt steht, eine abnehmende Dicke aufweist.

10. Windkraftanlage nach Anspruch 1, **dadurch gekennzeichnet, dass** sich das Dichtungselement (7) entlang der gesamten Flanke (3) erstreckt.

11. Windkraftanlage nach Anspruch 1, **dadurch gekennzeichnet, dass** die Bogensteine ferner eine Aussparung (9) an der Flanke (3) umfassen, die zur Aufnahme eines Dichtungselements (10) eines benachbarten Bogensteins (5) gestaltet ist.

12. Windkraftanlage nach Anspruch 1 **dadurch gekennzeichnet, dass** die Bogensteine ferner eine Aussparung (11) an der Flanke (3) in dem Innenraum aufweisen, in dem das Dichtungselement (7) angeordnet ist.

13. Konstruktionsverfahren der Windkraftanlage, die in einem der Ansprüche 1 bis 12 beschrieben ist, **gekennzeichnet durch** Umfassen der folgenden Schritte:
- Anordnen der Bogensteine, die den Turm der Windkraftanlage benachbart voneinander bilden, wodurch ein Hohlraum (6) geschaffen wird, mit einer Bewegung im Wesentlichen parallel zu der Flanke, sodass das Dichtungselement (7) in Richtung der relativen Bewegung des Bogensteins verformt wird, in den es integriert ist,
- Zusammenfügen benachbarter Bogensteine, bis das Dichtungselement (7) jedes davon in Kontakt mit der Flanke (4) des benachbarten Bogensteins tritt,
- Gießen von Füllmaterial in den Hohlraum (6).

14. Konstruktionsverfahren nach Anspruch 13, **dadurch gekennzeichnet, dass** mindestens ein Längsschnitt des Windkraftanlagenturms eine gerade Anzahl von Bogensteinen umfasst, von denen einige Bogensteine zwei Dichtungselemente (7) umfassen, die mit der Innenfläche (1) in Kontakt stehen, und andere Bogensteine zwei Dichtungselemente (7) umfassen, die in Kontakt mit der Außenfläche (2) stehen, und der Schritt des Anordnens der Bogensteine in der folgenden Reihenfolge durchgeführt wird:
- erstens, Errichten eines der Bogensteine, dessen Dichtungselemente (7) in Kontakt mit der Außenfläche (2) sind,
- schließlich, Errichten eines der Bogensteine, dessen Dichtungselemente (7) in Kontakt mit der Innenfläche (1) sind.

15. Konstruktionsverfahren nach Anspruch 13, **dadurch gekennzeichnet, dass** mindestens ein Längsschnitt des Windkraftanlagenturms eine ungerade Anzahl von Bogensteinen umfasst, von denen einige Bogensteine zwei Dichtungselemente (7) in Kontakt mit der Innenfläche (1) aufweisen, während andere Bogensteine zwei Dichtungselemente (7) in Kontakt mit der Außenfläche (2) aufweisen, und mindestens ein Bogenstein ein Dichtungselement in Kontakt mit der Außenfläche (2) und ein anderes mit der Innenfläche (1) aufweist und der Schritt des Anordnens der Bogensteine in der folgenden Reihenfolge durchgeführt wird:
- erstens, Errichten eines der Bogensteine, dessen Dichtungselemente (7) in Kontakt mit der Außenfläche (2) sind,
- in Zwischenschritten, Errichten der Bogensteine, die zwei Dichtungselemente (7) in Kontakt mit der Innenfläche (1) aufweisen und Bogensteine, die zwei Dichtungselemente (7) in Kontakt mit der Außenfläche (2) benachbart voneinander aufweisen,
- schließlich, Errichten des Bogensteins, der ein Dichtungselement (7) in Kontakt mit der Innenfläche (1) und ein anderes Dichtungselement (7) in Kontakt mit der Außenfläche (2) aufweist.

16. Konstruktionsverfahren nach Anspruch 13, **dadurch gekennzeichnet, dass** die Dichtungselemente (7) in Kontakt mit den Innen- und Außenflächen platziert werden, unter Berücksichtigung der Reihenfolge des Aufbaus der Bogensteine, die den Längsabschnitt bilden.

## Revendications

1. Éolienne comprenant une tour constituée de sections longitudinales comprenant à leur tour une pluralité de voussoirs, dans laquelle les voussoirs comprennent une face interne (1), une face externe (2) et au moins un flanc (3) configuré pour être en regard d'un flanc (4) d'un voussoir adjacent (5) de manière à définir une cavité (6), configurée pour être au moins partiellement remplie par un matériau de remplissage, et chaque voussoir comprend au moins un élément d'étanchéité (7) en matériau élastomère qui est configuré pour rester en contact avec le flanc (4) du voussoir adjacent fermant la cavité (6) latéralement, l'élément d'étanchéité (7) ayant une hauteur, mesurée dans un sens perpendiculaire au flanc (3), supérieure à la distance entre le flanc (3) où est situé ledit élément d'étanchéité et le flanc (4) du voussoir adjacent (5) lorsqu'ils sont reliés ; moyennant quoi chaque voussoir comprend deux flancs opposés (3) configurés pour être en regard d'un flanc (4) d'un voussoir adjacent et dans chaque flanc (3) les voussoirs comprennent un élément d'étanchéité (7) placé en contact avec la face interne (1) du voussoir ou placé en contact avec la face externe (2) du voussoir et moyennant quoi les voussoirs sont placés de telle façon qu'un flanc dans lequel l'élément d'étanchéité (7) est disposé en contact avec la face interne (1) est placé adjacent à un flanc d'un voussoir adjacent dans lequel l'élément d'étanchéité est en contact avec la face externe (2) ; **caractérisée en ce que** chaque voussoir est configuré pour être disposé avec un mouvement sensiblement parallèle au flanc, de sorte que l'élément d'étanchéité (7) se déforme dans le sens de mouvement relatif du voussoir sur lequel il est intégré.

2. Éolienne selon la revendication 1 **caractérisée en ce que** chaque section comprend au moins un voussoir avec deux éléments d'étanchéité en contact avec la face externe (2), un dans chaque flanc (3).

3. Éolienne selon la revendication 1 **caractérisée en ce que** chaque section comprend en outre au moins un voussoir avec deux éléments d'étanchéité en contact avec la face interne (1), un dans chaque flanc (3).

4. Éolienne selon la revendication 1 **caractérisée en ce qu'**elle comprend en outre au moins un voussoir avec deux éléments d'étanchéité, un en contact avec la face interne (1) et un en contact avec la face externe (2), un dans chaque flanc (3).

5. Éolienne selon la revendication 1 **caractérisée en ce que** l'élément d'étanchéité (7) est relié au flanc (3) au moyen d'une section de support (13) et comprend une extrémité opposée avec au moins une section de fermeture déformable (8) de telle sorte que le contact avec le voussoir adjacent (5) a lieu dans la section de fermeture (8).

6. Éolienne selon la revendication 5 **caractérisée en ce que** la section de fermeture (8) a une surface interne (16) configurée pour être en contact avec le matériau de remplissage et une surface externe (15) conçue pour être en contact avec le flanc (4) d'un voussoir adjacent.

7. Éolienne selon la revendication 6 **caractérisée en ce que** la surface interne (16) de la section de fermeture (8) a une géométrie courbe avec son centre de courbure étant situé vers l'intérieur de la cavité (6).

8. Éolienne selon la revendication 5 **caractérisée en ce que** l'élément d'étanchéité (7) comprend en outre une section de renfort (14) qui est une paroi s'étendant de la section de support (13) à la section de fermeture (8) et est conçue pour renforcer l'élément d'étanchéité (7).

9. Éolienne selon la revendication 5 **caractérisée en ce que** la section de fermeture (8) a une épaisseur décroissante de la section de support (13) à l'extrémité conçue pour être en contact avec le flanc (4) de l'élément d'étanchéité adjacent (5).

10. Éolienne selon la revendication 1 **caractérisée en ce que** l'élément d'étanchéité (7) s'étend le long de tout le flanc (3).

11. Éolienne selon la revendication 1 **caractérisée en ce que** les voussoirs comprennent en outre un évidement (9) sur le flanc (3) conçu pour recevoir un élément d'étanchéité (10) d'un voussoir adjacent (5).

12. Éolienne selon la revendication 1 **caractérisée en ce que** les voussoirs comprennent en outre un évidement (11) sur le flanc (3), à l'intérieur duquel l'élément d'étanchéité (7) est disposé.

13. Procédé de construction de l'éolienne décrite dans l'une quelconque des revendications 1 à 12 **caractérisé en ce qu'**il comprend les étapes consistant à :
- disposer les voussoirs qui constituent la tour de l'éolienne adjacents les uns aux autres créant une cavité (6), avec un mouvement sensiblement parallèle au flanc de sorte que l'élément d'étanchéité (7) se déforme dans le sens de mouvement relatif du voussoir sur lequel il est intégré,
- relier des voussoirs adjacents jusqu'à ce que l'élément d'étanchéité (7) de chacun entre en contact avec le flanc (4) du voussoir adjacent,
- verser le matériau de remplissage dans la cavité (6).

14. Procédé de construction selon la revendication 13 **caractérisé en ce qu'**au moins une section longitudinale de la tour d'éolienne comprend un nombre pair de voussoirs dont certains voussoirs comprennent deux éléments d'étanchéité (7) en contact avec la face interne (1) et d'autres voussoirs comprennent deux éléments d'étanchéité (7) en contact avec la face externe (2) et l'étape consistant à disposer les voussoirs est mise en oeuvre dans l'ordre suivant :
- premièrement, la mise en place de l'un des voussoirs qui a les éléments d'étanchéité (7) en contact avec la face externe (2),
- enfin la mise en place de l'un des voussoirs qui a les éléments d'étanchéité (7) en contact avec la face interne (1).

15. Procédé de construction selon la revendication 13 **caractérisé en ce qu'**au moins une section longitudinale de la tour d'éolienne comprend un nombre impair de voussoirs dont certains voussoirs ont deux éléments d'étanchéité (7) en contact avec la face interne (1), tandis que d'autres voussoirs ont deux éléments d'étanchéité (7) en contact avec la face externe (2) et au moins un voussoir comprend un élément d'étanchéité en contact avec la face externe (2) et un autre avec la face interne (1) et l'étape consistant à disposer des voussoirs est mise en œuvre dans l'ordre suivant :
- premièrement, la mise en place de l'un des voussoirs qui a les éléments d'étanchéité (7) en contact avec la face externe (2),
- dans les phases intermédiaires, la mise en place de voussoirs qui ont deux éléments d'étanchéité (7) en contact avec la face interne (1) et de voussoirs qui ont deux éléments d'étanchéité (7) en contact avec la face externe (2) adjacents l'un à l'autre,
- enfin, la mise en place du voussoir qui a un élément d'étanchéité (7) en contact avec la face interne (1) et un autre élément d'étanchéité (7) en contact avec la face externe (2).

16. Procédé de construction selon la revendication 13 **caractérisé en ce que** les éléments d'étanchéité (7) sont placés en contact avec les faces interne et externe en tenant compte de l'ordre d'assemblage des voussoirs qui constituent la section longitudinale.
